# EUROPEAN PATENT SPECIFICATION

(11) **EP 3 838 649 B1**
(45) Date of publication and mention of the grant of the patent: **20.03.2024**
(21) Application number: 19908961.6
(22) Date of filing: 24.09.2019
(51) Int. Cl.: B60L 3/00, H02B 1/18, B60R 16/023, H02J 7/00, H02B 1/26

(54) **DISTRIBUTION BOX AND ELECTRICAL VEHICLE**
VERTEILERKASTEN UND ELEKTRISCHES FAHRZEUG
BOÎTE DE DISTRIBUTION ET VÉHICULE ÉLECTRIQUE

(30) Priority: 08.01.2019 CN 201910017059
(43) Date of publication of application: 23.06.2021
(73) Proprietor: Huawei Digital Power Technologies Co., Ltd., Shenzhen, 518043 (CN)
(72) Inventor: CHEN, Taixian, Shenzhen, Guangdong 518129 (CN); LI, Duohui, Shenzhen, Guangdong 518129 (CN); WEI, Lishun, Shenzhen, Guangdong 518129 (CN)
(74) Representative: Grünecker Patent- und Rechtsanwälte PartG mbB
(86) International application number: PCT/CN2019/107460
(87) International publication number: WO 2020/143249

(56) References cited:
- AT-B- 381 810
- CN-A- 107 985 080
- CN-A- 108 116 231
- CN-A- 108 695 692
- CN-A- 109 823 178
- CN-B- 107 069 468
- CN-U- 202 474 546
- CN-U- 204 978 274
- CN-U- 205 622 080
- CN-U- 206 060 022
- CN-U- 206 697 437
- CN-U- 208 209 457
- CN-U- 208 299 274
- US-A1- 2017 365 435

## Description

### TECHNICAL FIELD

This application relates to the field of vehicles, and in particular, to a power distribution box and an electric vehicle.

### BACKGROUND

At present, electric vehicles are equipped with power distribution boxes. As a key component for electric power allocation and electrical connection in a high-voltage electrical system of the electric vehicle, the power distribution box is capable of allocating, through fuses, high-voltage electricity provided by a vehicle battery to an in-vehicle electric heater, an air conditioner, or the like. In addition, the power distribution box is further provided with positive and negative contactors inside, so that the vehicle battery can be quickly charged.

CN 108 695 692 A discloses a power distribution box for an electric vehicle comprising an outer cover, a base, a plurality of loops and a detecting system, wherein the plurality of loops and the detecting system are disposed in an inner space between the outer cover and the base, the inner surface of the outer cover is coated with an insulating layer, and the inner surface of the outer cover is coated with a shielding layer that is grounded through a grounding wire provided on the outer cover.

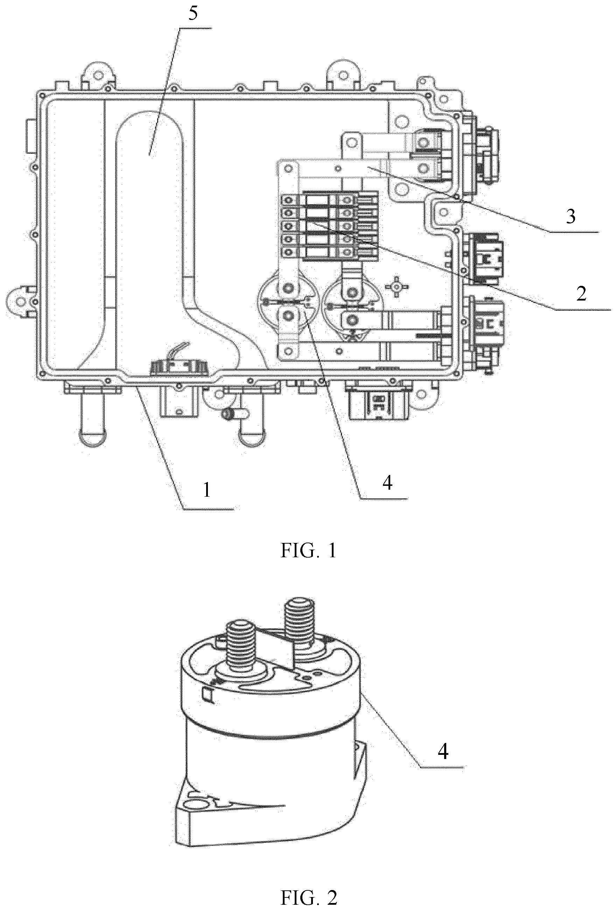

FIG. 1 is a schematic diagram of an internal structure of a power distribution box in the prior art. FIG. 2 is a three-dimensional diagram of a contactor in FIG. 1. As shown in FIG. 1 and FIG. 2, the power distribution box includes a case 1, where a hardware circuit board 5, a plurality of fuses 2, a copper bar 3, and two independent contactors 4 are disposed inside the case 1. The contactors 4 are connected to one inner side surface of the case. The fuses 2 are arranged along a longitudinal axis in a direction parallel to the inner side surface to which the contactors 4 are fastened, which is a flat layout. The copper bar 3 disposed inside the power distribution box is also in a flat layout.

The prior-art power distribution box has a disadvantage of a large volume to occupy large space.

### SUMMARY

Embodiments of this application provide a power distribution box and an electric vehicle, to resolve a problem of large space occupied by a power distribution box.

To achieve the foregoing objective, the following technical solutions are used in the embodiments of this application:

A first aspect of the embodiments of this application provides a power distribution box, including: a case, where a fuse and a contactor are included inside the case; and an input terminal configured to electrically connect an external power source, an output terminal configured to electrically connect an external electrical appliance, and a charge terminal configured to electrically connect an external charging circuit are further integrated into the case.

The external power source is used to supply power to the external electrical appliance through the power distribution box, and the external charging circuit is used to charge the external power source through the power distribution box.

The input terminal is electrically connected to the charge terminal through the contactor.

The contactor is connected to a first inner side surface of the case.

Two ends of the fuse are respectively provided with a first wiring terminal and a second wiring terminal. The wiring terminals extend away from the fuse in a direction perpendicular to a longitudinal axis of the fuse, and the longitudinal axis is an axis of the fuse passing through the two ends. The fuse is connected to the first inner side surface through the first wiring terminal.
The fuse is electrically connected to the input terminal through the second wiring terminal and electrically connected to the output terminal through the first wiring terminal, and an included angle between the longitudinal axis of the fuse and the first inner side surface is greater than 0°. A magnitude of the included angle between the longitudinal axis of the fuse and the first inner side surface is determined to make a height of the fuse in the vertical direction in the case less than or equal to the height of the contactor when the height of the fuse is greater than the height of the contactor. In this way, the fuse is vertically disposed on an inner side surface used to fasten the contactor, so as to make full use of vertical space inside the case and save horizontal space inside the case. In addition, when the fuse is vertically disposed, the wiring terminals of the fuse extend away from the fuse in a direction perpendicular to the longitudinal axis of the fuse. Compared with a disposition manner in which the wiring terminals extend away from the fuse in a direction parallel to the longitudinal axis of the fuse, this does not require reserving relatively large operation space in a horizontal direction for fastening of the wiring terminals, thereby saving internal space of the power distribution box.

In an optional implementation, the included angle between the longitudinal axis and the first inner side surface is 90°. In this way, the fuse is easier to fasten, and occupies smaller horizontal space in a direction of the first inner side surface inside the case, so as to make full use of space in a vertical direction perpendicular to the first inner side surface inside the case.

In an optional implementation, the first wiring terminal is electrically connected to the output terminal through a bare crimp terminal, where the bare crimp terminal includes a round portion and a cylindrical portion that are connected together, the round portion is electrically connected to the first wiring terminal, and the cylindrical portion is electrically connected to the output terminal. Compared with a manner of disposing a copper bar for circuit switching, using a bare crimp terminal for circuit switching occupies less space and further saves the internal space of the power distribution box, thereby reducing a size of the power distribution box and reducing space occupied by the power distribution box.

In an optional implementation, the round portion of the bare crimp terminal is provided with threads on an inner side, and the round portion is electrically connected to the first wiring terminal through a bolt. In this way, the bare crimp terminal and the wiring terminal are fixedly connected through the bolt, so that wiring is more secure.

In an optional implementation, the input terminal is electrically connected to the charge terminal through a copper bar, and the second wiring terminal is electrically connected to the input terminal through the copper bar. In this way, the copper bar can be used to connect components inside the power distribution box and transmit current between the components.

In an optional implementation, the copper bar includes a positive copper bar and a negative copper bar that are respectively connected to the input terminal and the charge terminal at two ends, the positive copper bar and the negative copper bar are arranged in a direction perpendicular to the first inner side surface, and the positive copper bar and the negative copper bar are arranged in parallel in a length direction of the positive copper bar and the negative copper bar. Such wiring manner of the copper bar features more smooth wiring and, compared with a manner in which the positive copper bar and the negative copper bar are sequentially arranged in a horizontal direction, further saves space in the horizontal direction inside the power distribution box, thereby reducing the size of the power distribution box and reducing the space occupied by the power distribution box.

In an optional implementation, the charge terminal is connected to the copper bar through a duplex contactor. Compared with using two independent contactors, using the duplex contactor features a higher integrity and significantly saves the internal space of the power distribution box, thereby reducing the size of the power distribution box and reducing the space occupied by the power distribution box.

In an optional implementation, the contactor is a unicoil structure. Compared with a dual-coil structure, the unicoil structure occupies less space and saves the internal space of the power distribution box, thereby reducing the size of the power distribution box and reducing the space occupied by the power distribution box.

In an optional implementation, there are a plurality of fuses, first wiring terminals of the different fuses extend along a same direction, and second wiring terminals of the different fuses extend along a same direction. Wiring for the wiring terminals of the fuse in this manner are more neat and even, and simplifies an internal structure of the power distribution box.

In an optional implementation, a hardware circuit board is further disposed inside the case, where the hardware circuit board is disposed close or adjacent to an inner side surface of the case. In this way, the internal space of the power distribution box is saved.

A second aspect of the embodiments of this application provides an electric vehicle, where the electric vehicle includes the foregoing power distribution box. In this way, the power distribution box has a smaller volume, and saves internal space of the electric vehicle.

In an optional implementation of the second aspect, the electric vehicle is further provided with an in-vehicle electrical appliance, and the in-vehicle electrical appliance is connected to the output terminal of the power distribution box.

In an optional implementation of the second aspect, the in-vehicle electrical appliance is an electric heater, an air conditioner, or an in-vehicle charger.

In an optional implementation of the second aspect, the electric vehicle is further provided with an in-vehicle power source, and the in-vehicle power source is connected to the input terminal of the power distribution box. In this way, the in-vehicle power source is able to supply power to the in-vehicle electrical appliance.

### BRIEF DESCRIPTION OF DRAWINGS

FIG. 1 is a schematic diagram of an internal structure of a power distribution box in the prior art;
FIG. 2 is a three-dimensional diagram of a contactor in FIG. 1;
FIG. 3 is a schematic diagram of an internal structure of a power distribution box according to an embodiment of this application;
FIG. 4 is a schematic diagram of a connection structure of fuses according to an embodiment of this application;
FIG. 5 is a schematic diagram of a connection structure of a single fuse in FIG. 4;
FIG. 6 is a three-dimensional diagram of a contactor according to an embodiment of this application;
FIG. 7 is a schematic diagram of a unicoil structure inside a contactor according to an embodiment of this application;
FIG. 8 is a schematic diagram of a dual-coil structure inside a contactor according to an embodiment of this application; and
FIG. 9 is a schematic structural diagram of an electric vehicle according to an embodiment of this application.

### Reference numerals in the accompanying drawings:

1-case, 2-hardware circuit board, 3-fuse, 4-copper bar, 5-contactor, 10-input terminal, 11-first inner side surface, 20-output terminal, 30-charge terminal, 31-wiring terminal, 32-first bolt, 33-bare crimp terminal, 34-second bolt, 41-positive copper bar, 42-negative copper bar, 51-coil, 301-first end, 302-second end, 311-first wiring terminal, and 312-second wiring terminal.

### DESCRIPTION OF EMBODIMENTS

The following describes the technical solutions in the embodiments of this application with reference to the accompanying drawings in the embodiments of this application.

In the descriptions of this application, orientations or position relationships indicated by the terms "middle", "up", "down", "front", "rear", "left", "right", "vertical", "horizontal", "top", "bottom", "inside", "outside", and the like are based on orientations or position relationships shown in the accompanying drawings, and are merely intended to simplify description of this application for a purpose of easy description, rather than indicating or implying that an apparatus or a part must have a particular direction or must be constructed and operated in a particular orientation. Therefore, this shall not be construed as any limitation on this application.

In the descriptions of this application, it should be noted that unless otherwise expressly stipulated and specified, the terms "install", "join together", and "connect" shall be understood in a broad sense, for example, may be fixed connection, or may be removable connection, or integral connection. A person skilled in the art can understand a specific meaning of the terms in this application based on a specific case.

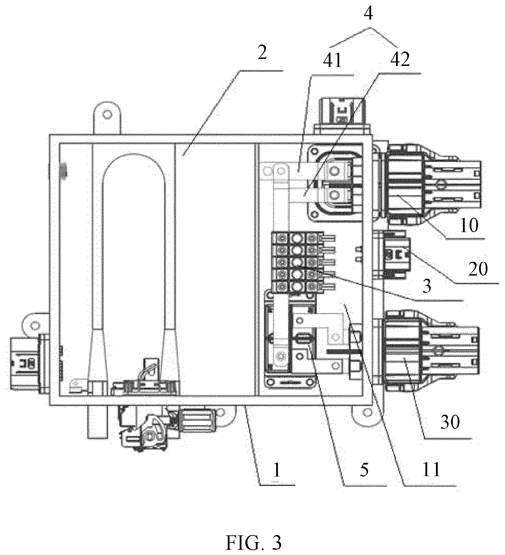

An embodiment of this application provides a power distribution box. FIG. 3 is a schematic diagram of an internal structure of the power distribution box according to this embodiment of this application. As shown in FIG. 3, the power distribution box includes: a case 1, where the case 1 accommodates a fuse 3 and a contactor 5. An input terminal 10 configured to electrically connect an external power source, an output terminal 20 configured to electrically connect an external electrical appliance, and a charge terminal 30 configured to electrically connect an external charging circuit are further integrated into the case 1. The external power source is used to supply power to the external electrical appliance through the power distribution box, and the external charging circuit is used to charge the external power source through the power distribution box.

The contactor 5 is connected to a first inner side surface 11 of the case 1. The input terminal 10 is electrically connected to the charge terminal 30 through the contactor 5.

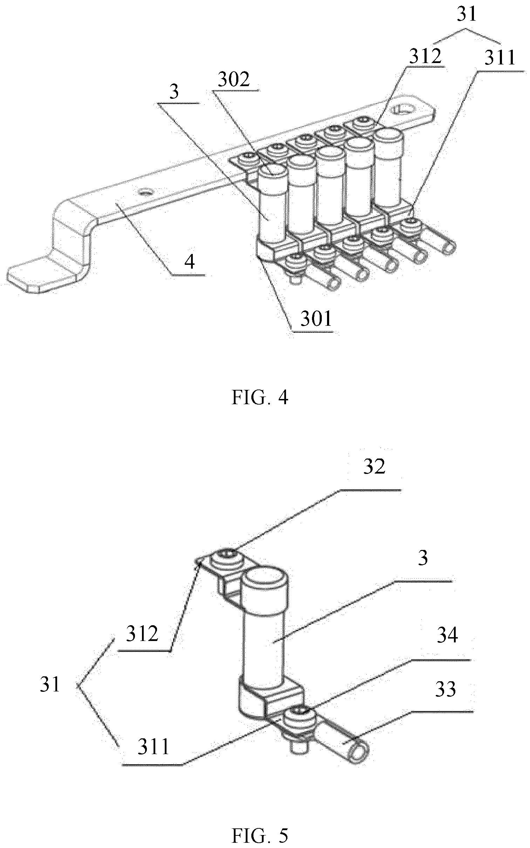

FIG. 4 is a schematic diagram of a connection structure of fuses according to an embodiment of this application. FIG. 5 is a schematic diagram of a connection structure of an individual fuse in FIG. 4. As shown in FIG. 4 and FIG. 5, two ends of the fuse 3 are respectively provided with a first wiring terminal 311 and a second wiring terminal 312, where the wiring terminals each extend away from the fuse along a direction perpendicular to a longitudinal axis of the fuse 3, and the longitudinal axis is an axis of the fuse passing through the two ends. The fuse 3 is electrically connected to the input terminal 10 through the second wiring terminal 312 and electrically connected to the output terminal 20 through the first wiring terminal 311, and an included angle between the longitudinal axis of the fuse 3 and the first inner side surface 11 is greater than 0°.

For example, the case may be made of a metallic or stainless steel material, so that the case has a higher strength and can protect components disposed inside the case. For example, a shape of the case may be a cube or another regular polyhedron, so that the case has a firmer structure, facilitating assembly and use. The material and shape of the case are not limited in this application. A person skilled in the art may choose an appropriate material and shape based on needs. These shall all fall within the protection scope of this application.

The first inner side surface is any inner side surface of the case 1. The first inner side surface may be a flat surface or an arc surface. This is not limited in this application. A person skilled in the art may make a choice based on needs. These shall all fall within the protection scope of this application.

A first inner side surface 11 is used as a horizontal surface. A direction parallel to the first inner side surface 11 inside the case 1 is a horizontal direction and a direction perpendicular to the first inner side surface 11 is a vertical direction. One end of the contactor 5 is connected to the first inner side surface 11 and the contactor 5 has a specified height. Therefore, a height of the case 1 in the vertical direction shall be greater than or equal to a height of the contactor 5. The fuse 3 is vertically disposed on the first inner side surface 11 in a direction in which the included angle between the longitudinal axis and the first inner side surface 11 is greater than 0°, so as to make full use of space in the vertical direction inside the case 1 and save space in the horizontal direction inside the case 1.

In addition, the wiring terminals of the fuse extend away from the fuse in a direction perpendicular to the longitudinal axis of the fuse. During fastening of the fuse, an operation merely needs to be performed on the wiring terminals, imposing a relatively low requirement on the space in the horizontal direction. Compared with a manner of vertically disposing a fuse inside a case by directly extending wiring terminals away from the fuse in a direction parallel to an axis of the fuse, requiring relatively large operation space in the horizontal direction during fastening of the wiring terminals, the manner of disposing the wiring terminals in this embodiment of this application facilitates installation with smaller operation space, thereby reducing a size of the power distribution box and reducing space occupied by the power distribution box.

The external electrical appliance may be a small heater, charger, or air conditioner. The external charging circuit may be, for example, an alternating-current power grid provided by a municipal administration.

When the power distribution box is in use, the input terminal 10 may be connected to an external power source and the output terminal 20 may be electrically connected to an external electrical appliance, so as to allocate current supplied by the external power source to the external electrical appliance under protection provided by the fuse 3.

Alternatively, the input terminal 10 may be connected to the external power source and the charge terminal 30 may be connected to an external charging circuit so as to charge the external power source through the external charging circuit.

Electrically connecting the fuse 3 to a circuit in which the power distribution box supplies power to the external electrical appliance can protect the external electrical appliance. When current input by the input terminal 10 exceeds a specified value of the external electrical appliance for a period of time, the fuse melts a fuse body by using heat generated by the fuse itself, so as to break the circuit.

In the power distribution box according to this embodiment of this application, the fuse is vertically disposed in the power distribution box, so as to make full use of the vertical space in the power distribution box. Compared with a manner of horizontally flat disposition, this saves internal space of the power distribution box, thereby reducing the size of the power distribution box and reducing the space occupied by the power distribution box.

In addition, the wiring terminals of the fuse extend away from the fuse in a direction perpendicular to the axis of the fuse, thereby reducing operation space and further saving the internal space of the power distribution box.

For example, an included angle between the longitudinal axis of the fuse 3 and the first inner side surface 11 may be in a range of 45° to 90°. When a tilt angle is 90°, the fuse 3 can extend, along a direction perpendicular to a bottom surface of the case 1, towards a direction of a top surface of the case 1. Compared with a manner of disposing the fuse flat on the first inner side surface 11, this manner at least reduces a width equal to a difference between a height of the fuse and a diameter of the bottom surface of the fuse, and facilitates installation to further make full use of the vertical space in the power distribution box and save the horizontal space in the power distribution box.

According to the invention, a magnitude of the included angle between the longitudinal axis of the fuse 3 and the first inner side surface 11 is determined based on a height of the contactor 5, so as to make a height of the fuse 3 in the vertical direction in the case less than or equal to the height of the contactor 5. When the height of the fuse 3 is greater than the height of the contactor 5, the included angle between the longitudinal axis of the fuse 3 and the first inner side surface 11 may be adjusted to align the height of the fuse 3 in the vertical direction with the height of the contactor 5, so as to make full use of the vertical space inside the case 1. As shown in FIG. 4, a first wiring terminal 311 is disposed on a first end 301 of the fuse 3, and a second wiring terminal 312 is disposed on a second end 302 of the fuse 3. When wiring terminals 31 at two ends of one fuse are connected to to-be-connected components disposed in different directions of the fuse 3, the first wiring terminal 311 and the second wiring terminal 312 each extend towards a direction of a respective to-be-connected component in a direction perpendicular to the axis of the fuse. For example, the wiring terminals at the two ends of the fuse may extend in a Z shape towards opposite directions in the direction perpendicular to the axis of the fuse, or may extend towards the same direction in the direction perpendicular to the axis of the fuse.

For example, there may be a plurality of external electrical appliances electrically connected to the output terminal 20. A fuse is disposed in a circuit of each external electrical appliance. Therefore, a plurality of fuses may be disposed. As shown in FIG. 4, first wiring terminals 311 of different fuses 3 extend along the same direction, and second wiring terminals 312 of the fuses 3 extend along the same direction.

In the power distribution box according to this embodiment of this application, the wiring terminals of the plurality of fuses have a more orderly and simple wiring manner, thereby simplifying an internal structure of the power distribution box.

As shown in FIG. 3, a copper bar 4 is further disposed in the case 1. The input terminal 10 is electrically connected to the charge terminal 30 through the copper bar 4, and the second wiring terminal 312 is electrically connected to the input terminal through the copper bar 4.

For example, the copper bar 4 is a long conductor made of a copper material, with a rectangular cross section, and may be used to connect components inside the power distribution box and transmit current between the components.

As shown in FIG. 3, the copper bar 4 includes a positive copper bar 41 and a negative copper bar 42. Two ends of the positive copper bar 41 are respectively connected to positive poles of the input terminal 10 and the charge terminal 30. Two ends of the negative copper bar 42 are respectively connected to negative poles of the input terminal 10 and the charge terminal 30. The positive copper bar 41 and the negative copper bar 42 are arranged in a direction perpendicular to the first inner side surface. The positive copper bar 41 is wired at an upper layer and the negative copper bar 42 is wired under the positive copper bar 41. Alternatively, the positive copper bar 41 may be wired under the negative copper bar 42.

For example, the second wiring terminal 312 is electrically connected to the positive copper bar 41. In this case, the second wiring terminal 312 occupies no space at the bottom of the power distribution box. Such manner of disposing the wiring terminals makes full use of the vertical space inside the case 1. Compared with a disposition manner in which wiring terminals extend towards a direction away from the fuse along a direction parallel to an axis of the fuse when a fuse is laid flat at the bottom of the case, which occupies a large amount of horizontal space inside the case 1, the disposition manner of the wiring terminals in this embodiment of this application at least saves a width of one wiring terminal in the horizontal direction of the power distribution box.

In the power distribution box according to this embodiment of this application, there is no complex switching in a wiring manner of the copper bar, thereby implementing more smooth wiring. In addition, compared with a prior-art arrangement manner in which a positive copper bar 41 and a negative copper bar 42 are sequentially arranged in a direction parallel to the first inner side surface, the wiring manner in this embodiment of this application further saves space in the horizontal direction in the power distribution box, thereby reducing a size of the power distribution box and reducing space occupied by the power distribution box.

For example, the wiring terminals 31 may include a ring structure fit onto the first end 301 and the second end 302 of the fuse 3, and a sheet structure connected to the ring structure. The sheet structure may be used to connect an external component. For example, the sheet structure may be further provided with a positioning hole and the positioning hole may fit to a positioning element. During installation of the fuse in the power distribution box, the fuse may be fixedly connected to another component in the power distribution box through the positioning element and the sheet structure of the wiring terminals.

For example, the positioning element may be a bolt. For example, a tapped hole is provided at a corresponding position, connected to the wiring terminal, of the component inside the power distribution box. The bolt may pass through the positioning hole and connect through threads to the tapped hole of the component inside the power distribution box, so as to fasten the fuse to the power distribution box.

As shown in FIG. 5, the second wiring terminal 312 is connected to the positive copper bar 41 through a first bolt 32. The wiring terminal disposed at the bottom of the fuse 3 can be fixedly connected to the first inner side surface 11 of the case 1 through a second bolt 34.

In the power distribution box according to this embodiment of this application, the wiring terminals at both ends of the fuse are all fixedly connected to the component inside the power distribution box through the bolts, ensuring connection reliability.

As shown in FIG. 5, a bare crimp terminal 33 is further fastened to the second bolt 34. For example, the bare crimp terminal 33 may be an OT terminal. The second bolt 34 can be electrically connected to the output terminal 20 through the OT terminal. For example, the OT terminal has a round head and a cylindrical tail, and presents an appearance of OT. For example, threads are provided on an inner side of around portion of the OT terminal. The OT terminal may be connected to the second bolt 34 through threads and connected to the output terminal 20 through the cylindrical portion.

During installation, the round portion of the OT terminal merely needs to be positioned to a position of the positioning hole of the wiring terminal at the bottom of the fuse 3, the second bolt 34 sequentially passes through the positioning hole and the round portion of the OT terminal, and then the bolt is tightened, so as to fasten the OT terminal and the first wiring terminal 311 to the first inner side surface of the case1. In this way, the round portion of the OT terminal is electrically connected to the first wiring terminal 311 through the second bolt 34, and the cylindrical portion of the OT terminal is electrically connected to the output terminal 20.

In the power distribution box according to this embodiment of this application, the OT terminal is used for circuit switching. Compared with a prior-art manner in which a copper bar is disposed for circuit switching, the power distribution box in this embodiment has a smaller weight, occupies less space, and features simpler assembly. This further saves internal space of the power distribution box, reduces a size of the power distribution box and a weight of the power distribution box, reduces space occupied by the power distribution box, and simplifies operations for assembly personnel.

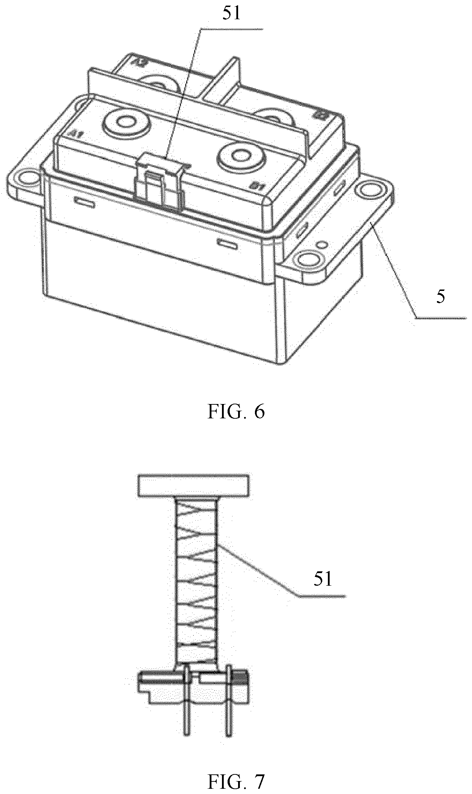

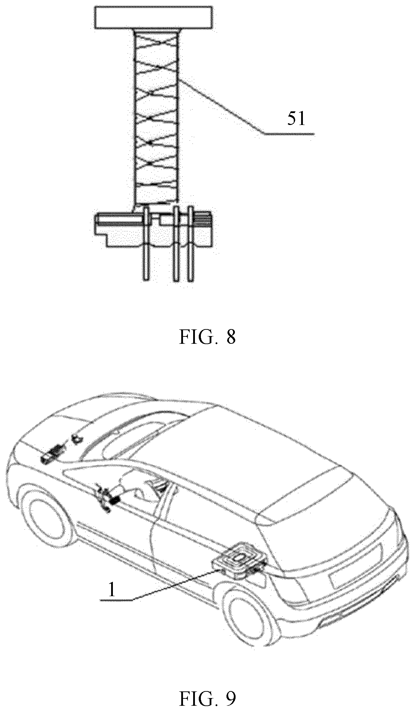

As shown in FIG. 3, a contactor 5 is further disposed in the case 1. The charge terminal 30 is connected to the copper bar 4 through the contactor 5. FIG. 6 is a three-dimensional diagram of the contactor 5 according to this embodiment of this application. FIG. 7 is a schematic diagram of a unicoil structure inside the contactor according to this embodiment of this application. FIG. 8 is a schematic diagram of a dual-coil structure inside the contactor according to this embodiment of this application. As shown in FIG. 6, FIG. 7, and FIG. 8, the contactor 5 is a duplex contactor. The duplex contactor is capable of integrating two separate contactors as a whole, saving more space compared with two separate contactors.

The duplex contactor includes a contact and a coil. For example, the dual contactor is provided with a coil 51. When current passes through the coil of the contactor, a magnetic field is generated to close the contact, so as to control a circuit load. The duplex contactor may be a unicoil structure or a dual-coil structure. If the duplex contactor is a unicoil structure, two circuits may be closed or open simultaneously. If the duplex contactor is a dual-coil structure, two circuits may be controlled separately to close or open.

The contactors of the power distribution box are closed or open simultaneously in a fast-charge application circuit or an application circuit with a microcontrol unit loop. Therefore, the two contactors can be integrated as a whole and controlled by using a single coil. FIG. 7 shows a case in which the coil 51 is a unicoil structure. Compared with the dual-coil structure, the unicoil structure occupies less space.

As shown in FIG. 3, for example, a hardware circuit board 2 is further disposed in the case 1. The hardware circuit board 2 is electrically connected to a circuit that connects the input terminal 10 and the charge terminal 30 and/or electrically connected to a circuit that connects the input terminal 10 and the output terminal 20. When the external power source is charged through the external charging circuit 30, the hardware circuit board 2 may be used for direct current/alternating current conversion. When power is supplied to the external electrical appliance through the external power source, the hardware circuit board 2 may be used for voltage division.

For example, the hardware circuit board may be disposed close or adjacent to the inner side surface of the case 1, thereby saving internal space of the case 1.

In the power distribution box according to this embodiment of this application, the duplex contactor is used to substitute two contactors, resulting in a higher degree of integration. In addition, the unicoil structure may be used to substitute the dual-coil structure, thereby significantly saving internal space of the power distribution box, reducing a weight of the power distribution box and a size of the power distribution box, and reducing space occupied by the power distribution box.

An embodiment of this application further provides an electric vehicle. FIG. 9 is a schematic structural diagram of the electric vehicle according to this embodiment of this application. As shown in FIG. 9, the electric vehicle includes the foregoing power distribution box. The power distribution box may be disposed in a trunk of the vehicle or may be disposed in a front compartment of the vehicle.

For example, the electric vehicle is further provided with an in-vehicle electrical appliance. The in-vehicle electrical appliance is connected to the output terminal of the power distribution box. For example, the in-vehicle electrical appliance may be an electric heater, an air conditioner, or an in-vehicle charger.

For example, the electric vehicle is further provided with an in-vehicle power source. The in-vehicle power source is connected to the input terminal of the power distribution box, so as to supply power to the in-vehicle electrical appliance through the in-vehicle power source.

For example, the electric vehicle may be further electrically connected to an external circuit through the charge terminal of the power distribution box, and charge the in-vehicle power source by using the external charging circuit. For example, the external circuit may be a charging pile that may be fastened to the ground or a wall and installed inside a parking lot or a charge station of a public building and a residential area, and is capable of charging electric vehicles of different models based on different voltage grades. An input terminal of the charging pile is directly connected to an alternating-current power grid, and an output terminal is equipped with a charging plug used to charge an electric vehicle.

The electric vehicle according to this embodiment of this application uses the foregoing power distribution box. The power distribution box features simpler assembly, a smaller size, and a smaller weight, thereby reducing internal space of the vehicle and facilitating assembly and use.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power distribution box, wherein the power distribution box comprises: a case (1), wherein a fuse (3) and a contactor (5) are comprised inside the case (1); and an input terminal (10) configured to electrically connect an external power source, an output terminal (20) configured to electrically connect an external electrical appliance, and a charge terminal (30) configured to electrically connect an external charging circuit are further integrated into the case (1), wherein
the external power source is used to supply power to the external electrical appliance through the power distribution box, and the external charging circuit is used to charge the external power source through the power distribution box;
the contactor (5) is connected to a first inner side surface (11) of the case (1);
the input terminal (10) is electrically connected to the charge terminal (30) through the contactor (5);
two ends of the fuse (3) are respectively provided with a first wiring terminal (311) and a second wiring terminal (312), wherein the wiring terminals (311, 312) extend away from the fuse (3) in a direction perpendicular to a longitudinal axis of the fuse (3), and the longitudinal axis is an axis of the fuse (3) passing through the two ends, and the fuse (3) is connected to the first inner side surface (11) through the first wiring terminal (311); and
the fuse (3) is electrically connected to the input terminal (10) through the second wiring terminal (312) and electrically connected to the output terminal (20) through the first wiring terminal (311), and an included angle between the longitudinal axis of the fuse (3) and the first inner side surface (11) is greater than 0°, wherein a magnitude of the included angle between the longitudinal axis of the fuse (3) and the first inner side surface (11) is determined to make a height of the fuse (3) in the vertical direction in the case less than or equal to the height of the contactor (5) when the height of the fuse (3) is greater than the height of the contactor (5).

2. The power distribution box according to claim 1, wherein the included angle between the longitudinal axis and the first inner side surface (11) is 90°.

3. The power distribution box according to claim 1 or 2, wherein the first wiring terminal (311) is electrically connected to the output terminal (20) through a bare crimp terminal, wherein the bare crimp terminal comprises a round portion and a cylindrical portion that are connected together, the round portion is electrically connected to the first wiring terminal (311), and the cylindrical portion is electrically connected to the output terminal (20).

4. The power distribution box according to claim 3, wherein the round portion is provided with threads on an inner side, and the round portion is electrically connected to the first wiring terminal (311) through a bolt.

5. The power distribution box according to any one of claims 1 to 4, wherein the input terminal (10) is electrically connected to the charge terminal (30) through a copper bar (4), and the second wiring terminal (312) is electrically connected to the input terminal (10) through the copper bar (4).

6. The power distribution box according to claim 5, wherein the copper bar (4) comprises a positive copper bar (41) and a negative copper bar (42) that are respectively connected to the input terminal (10) and the charge terminal (30) at two ends, the positive copper bar (41) and the negative copper bar (42) are arranged in a direction perpendicular to the first inner side surface (11), and the positive copper bar (41) and the negative copper bar (42) are arranged in parallel in a length direction of the positive copper bar (41) and the negative copper bar (42).

7. The power distribution box according to any one of claims 1 to 6, wherein the contactor (5) is a duplex contactor (5).

8. The power distribution box according to claim 7, wherein the duplex contactor (5) is a unicoil structure.

9. The power distribution box according to any one of claims 1 to 8, wherein there are a plurality of fuse (3), first wiring terminals (311) of the different fuse (3) extend along a same direction, and second wiring terminals (312) of the different fuses (3) extend along a same direction.

10. The power distribution box according to any one of claims 1 to 9, wherein a hardware circuit board is further disposed inside the case (1), and the hardware circuit board is disposed close or adjacent to an inner side surface of the case (1).

11. An electric vehicle, wherein the electric vehicle comprises the power distribution box according to any one of claims 1 to 10.

12. The electric vehicle according to claim 11, wherein the electric vehicle is further provided with an in-vehicle electrical appliance, and the in-vehicle electrical appliance is electrically connected to the output terminal (20) of the power distribution box.

13. The electric vehicle according to claim 12, wherein the in-vehicle electrical appliance is an electric heater, an air conditioner, or an in-vehicle charger.

14. The electric vehicle according to any one of claims 11 to 13, wherein the electric vehicle is further provided with an in-vehicle power source, and the in-vehicle power source is electrically connected to the input terminal (10) of the power distribution box.

## Patentansprüche

1. Leistungsverteilungskasten, wobei der Leistungsverteilungskasten Folgendes umfasst:
ein Gehäuse (1), wobei eine Sicherung (3) und ein Schaltschütz (5) in dem Gehäuse (1) enthalten sind, und ein Eingangsanschluss (10), konfiguriert zum elektrischen Verbinden einer externen Leistungsquelle, ein Ausgangsanschluss (20), konfiguriert zum elektrischen Verbinden eines externen elektrischen Geräts, und ein Ladeanschluss (30), konfiguriert zum elektrischen Verbinden einer externen Ladeschaltung, ferner in dem Gehäuse (1) integriert sind, wobei
die externe Leistungsquelle verwendet wird, dem externen elektrischen Gerät durch den Leistungsverteilungskasten Leistung zuzuführen, und die externe Ladeschaltung verwendet wird, die externe Leistungsquelle durch den Leistungsverteilungskasten zu laden;
das Schaltschütz (5) mit einer ersten Innenseitenoberfläche (11) des Gehäuses (1) verbunden ist;
der Eingangsanschluss (10) mit dem Ladeanschluss (30) durch das Schaltschütz (5) elektrisch verbunden ist;
zwei Enden der Sicherung (3) jeweils mit einem ersten Verdrahtungsanschluss (311) und einem zweiten Verdrahtungsanschluss (312) versehen sind, wobei die Verdrahtungsanschlüsse (311, 312) sich weg von der Sicherung (3) in einer Richtung senkrecht zu einer Längsachse der Sicherung (3) erstrecken und die Längsachse eine Achse der Sicherung (3) ist, die durch die zwei Enden verläuft, und die Sicherung (3) mit der ersten Innenseitenoberfläche (11) durch den ersten Verdrahtungsanschluss (311) verbunden ist; und
die Sicherung (3) mit dem Eingangsanschluss (10) durch den zweiten Verdrahtungsanschluss (312) elektrisch verbunden ist und mit dem Ausgangsanschluss (20) durch den ersten Verdrahtungsanschluss (311) elektrisch verbunden ist und ein eingeschlossener Winkel zwischen der Längsachse der Sicherung (3) und der ersten Innenseitenoberfläche (11) größer als 0° ist, wobei eine Größenordnung des eingeschlossenen Winkels zwischen der Längsachse der Sicherung (3) und der ersten Innenseitenoberfläche (11) bestimmt wird, um eine Höhe der Sicherung (3) in der vertikalen Richtung in dem Gehäuse kleiner als die oder gleich der Höhe des Schaltschützes (5) zu machen, wenn die Höhe der Sicherung (3) größer als die Höhe des Schaltschützes (5) ist.

2. Leistungsverteilungskasten nach Anspruch 1, wobei der eingeschlossene Winkel zwischen der Längsachse und der ersten Innenseitenoberfläche (11) 90° beträgt.

3. Leistungsverteilungskasten nach Anspruch 1 oder 2, wobei der erste Verdrahtungsanschluss (311) mit dem Ausgangsanschluss (20) durch eine blanken Quetschanschluss elektrisch verbunden ist, wobei der blanke Quetschanschluss einen runden Abschnitt und einen zylindrischen Abschnitt umfasst, die miteinander verbunden sind, wobei der runde Abschnitt mit dem ersten Verdrahtungsanschluss (311) elektrisch verbunden ist und der zylindrische Abschnitt mit dem Ausgangsanschluss (20) elektrisch verbunden ist.

4. Leistungsverteilungskasten nach Anspruch 3, wobei der runde Abschnitt mit Gewindegängen an einer Innenseite versehen ist und der runde Abschnitt mit dem ersten Verdrahtungsanschluss (311) durch einen Bolzen elektrisch verbunden ist.

5. Leistungsverteilungskasten nach einem der Ansprüche 1 bis 4, wobei der Eingangsanschluss (10) durch eine Kupferstange (4) mit dem Ladeanschluss (30) elektrisch verbunden ist und der zweite Verdrahtungsanschluss (312) durch die Kupferstange (4) mit dem Eingangsanschluss (10) elektrisch verbunden ist.

6. Leistungsverteilungskasten nach Anspruch 5, wobei die Kupferstange (4) eine positive Kupferstange (41) und eine negative Kupferstange (42) umfasst, die jeweils mit dem Eingangsanschluss (10) und dem Ladeanschluss (30) an zwei Enden verbunden sind, wobei die positive Kupferstange (41) und die negative Kupferstange (42) in einer Richtung senkrecht zu der ersten Innenseitenoberfläche (11) angeordnet sind und die positive Kupferstange (41) und die negative Kupferstange (42) parallel in einer Längsrichtung der positiven Kupferstange (41) und der negativen Kupferstange (42) angeordnet sind.

7. Leistungsverteilungskasten nach einem der Ansprüche 1 bis 6, wobei das Schaltschütz (5) ein Doppel-Schaltschütz (5) ist.

8. Leistungsverteilungskasten nach Anspruch 7, wobei das Doppel-Schaltschütz (5) eine Struktur mit einer Wicklung ist.

9. Leistungsverteilungskasten nach einem der Ansprüche 1 bis 8, wobei eine Vielzahl von Sicherungen (3) vorhanden ist, erste Verdrahtungsanschlüsse (311) der verschiedenen Sicherungen (3) sich entlang einer selben Richtung erstrecken und zweite Verdrahtungsanschlüsse (312) der verschiedenen Sicherungen (3) sich entlang einer selben Richtung erstrecken.

10. Leistungsverteilungskasten nach einem der Ansprüche 1 bis 9, wobei eine Hardware-Leiterplatte ferner in dem Gehäuse (1) angeordnet ist und die Hardware-Leiterplatte nahe oder angrenzend an einer Innenseitenoberfläche des Gehäuses (1) angeordnet ist.

11. Elektrofahrzeug, wobei das Elektrofahrzeug den Leistungsverteilungskasten nach einem der Ansprüche 1 bis 10 umfasst.

12. Elektrofahrzeug nach Anspruch 11, wobei das Elektrofahrzeug ferner mit einem elektrischen Gerät im Fahrzeug versehen ist und das elektrische Gerät im Fahrzeug mit dem Ausgangsanschluss (20) des Leistungsverteilungskastens elektrisch verbunden ist.

13. Elektrofahrzeug nach Anspruch 12, wobei das elektrische Gerät im Fahrzeug eine elektrische Heizung, eine Klimaanlage oder ein Ladegerät im Fahrzeug ist.

14. Elektrofahrzeug nach einem der Ansprüche 11 bis 13, wobei das Elektrofahrzeug ferner mit einer Leistungsquelle im Fahrzeug versehen ist und die Leistungsquelle im Fahrzeug mit dem Eingangsanschluss (10) des Leistungsverteilungskastens elektrisch verbunden ist.

## Revendications

1. Boîte de distribution d'énergie, la boîte de distribution d'énergie comprenant : un boîtier (1), un fusible (3) et un contacteur (5) étant compris à l'intérieur du boîtier (1) ; et une borne d'entrée (10) configurée pour connecter électriquement une source d'énergie externe, une borne de sortie (20) configurée pour connecter électriquement un appareil électrique externe, et une borne de charge (30) configurée pour connecter électriquement un circuit de charge externe étant en outre intégrées dans le boîtier (1), dans laquelle
la source d'énergie externe est utilisée pour fournir de l'énergie à l'appareil électrique externe par le biais de la boîte de distribution d'énergie, et le circuit de charge externe est utilisé pour charger la source d'énergie externe par le biais de la boîte de distribution d'énergie ;
le contacteur (5) est connecté à une première surface latérale interne (11) du boîtier (1) ;
la borne d'entrée (10) est connectée électriquement à la borne de charge (30) par le biais du contacteur (5) ;
deux extrémités du fusible (3) sont pourvues respectivement d'une première borne de câblage (311) et d'une deuxième borne de câblage (312), les bornes de câblage (311, 312) s'étendant à l'écart du fusible (3) dans une direction perpendiculaire à un axe longitudinal du fusible (3), et l'axe longitudinal étant un axe du fusible (3) passant par les deux extrémités, et le fusible (3) étant connecté à la première surface latérale interne (11) par le biais de la première borne de câblage (311) ; et
le fusible (3) est connecté électriquement à la borne d'entrée (10) par le biais de la deuxième borne de câblage (312) et connecté électriquement à la borne de sortie (20) par le biais de la première borne de câblage (311), et un angle inclus entre l'axe longitudinal du fusible (3) et la première surface latérale interne (11) est supérieur à 0°, une amplitude de l'angle inclus entre l'axe longitudinal du fusible (3) et la première surface latérale interne (11) étant déterminée pour rendre une hauteur du fusible (3) dans la direction verticale dans le boîtier inférieure ou égale à la hauteur du contacteur (5) lorsque la hauteur du fusible (3) est supérieure à la hauteur du contacteur (5).

2. Boîte de distribution d'énergie selon la revendication 1, dans laquelle l'angle inclus entre l'axe longitudinal et la première surface latérale interne (11) est de 90°.

3. Boîte de distribution d'énergie selon la revendication 1 ou la revendication 2, dans laquelle la première borne de câblage (311) est connectée électriquement à la borne de sortie (20) par le biais d'une borne de sertissage nue, la borne de sertissage nue comprenant une portion ronde et une portion cylindrique qui sont connectées l'une à l'autre, la portion ronde étant connectée électriquement à la première borne de câblage (311), et la portion cylindrique étant connectée électriquement à la borne de sortie (20).

4. Boîte de distribution d'énergie selon la revendication 3, dans laquelle la portion ronde est pourvue de filetages sur un côté interne, et la portion ronde est connectée électriquement à la première borne de câblage (311) par le biais d'un boulon.

5. Boîte de distribution d'énergie selon l'une quelconque des revendications 1 à 4, dans laquelle la borne d'entrée (10) est connectée électriquement à la borne de charge (30) par le biais d'une barre de cuivre (4), et la deuxième borne de câblage (312) est connectée électriquement à la borne d'entrée (10) par le biais de la barre de cuivre (4).

6. Boîte de distribution d'énergie selon la revendication 5, dans laquelle la barre de cuivre (4) comprend une barre de cuivre positive (41) et une barre de cuivre négative (42) qui sont connectées respectivement à la borne d'entrée (10) et à la borne de charge (30) au niveau de deux extrémités, la barre de cuivre positive (41) et la barre de cuivre négative (42) sont agencées dans une direction perpendiculaire à la première surface latérale interne (11), et la barre de cuivre positive (41) et la barre de cuivre négative (42) sont agencées en parallèle dans le sens de la longueur de la barre de cuivre positive (41) et de la barre de cuivre négative (42).

7. Boîte de distribution d'énergie selon l'une quelconque des revendications 1 à 6, dans laquelle le contacteur (5) est un contacteur duplex (5).

8. Boîte de distribution d'énergie selon la revendication 7, dans laquelle le contacteur duplex (5) est une structure à bobine unique.

9. Boîte de distribution d'énergie selon l'une quelconque des revendications 1 à 8, dans laquelle il y a une pluralité de fusibles (3), des premières bornes de câblage (311) du fusible différent (3) s'étendent le long d'une même direction, et des deuxièmes bornes de câblage (312) des différents fusibles (3) s'étendent le long d'une même direction.

10. Boîte de distribution d'énergie selon l'une quelconque des revendications 1 à 9, dans laquelle une carte de circuit imprimé matérielle est en outre disposée à l'intérieur du boîtier (1), et la carte de circuit imprimé matérielle est disposée à proximité de, ou adjacente à, une surface latérale interne du boîtier (1).

11. Véhicule électrique, le véhicule électrique comprenant la boîte de distribution d'énergie selon l'une quelconque des revendications 1 à 10.

12. Véhicule électrique selon la revendication 11, le véhicule électrique étant en outre pourvu d'un appareil électrique embarqué, et l'appareil électrique embarqué étant connecté électriquement à la borne de sortie (20) de la boîte de distribution d'énergie.

13. Véhicule électrique selon la revendication 12, dans lequel l'appareil électrique embarqué est un dispositif de chauffage électrique, un climatiseur, ou un chargeur embarqué.

14. Véhicule électrique selon l'une quelconque des revendications 11 à 13, le véhicule électrique étant en outre pourvu d'une source d'énergie embarquée, et la source d'énergie embarquée étant connectée électriquement à la borne d'entrée (10) de la boîte de distribution d'énergie.
